(19) **Europäisches Patentamt / European Patent Office / Office européen des brevets**

(11) **EP 1 386 058 B2**

(12) **NOUVEAU FASCICULE DE BREVET EUROPEEN**
Après la procédure d'opposition

(45) Date de publication et mention de la décision concernant l'opposition:
**20.01.2010 Bulletin 2010/03**

(45) Mention de la délivrance du brevet:
**19.07.2006 Bulletin 2006/29**

(21) Numéro de dépôt: **02738237.3**

(22) Date de dépôt: **10.05.2002**

(51) Int Cl.:
*F01D 5/10* (2006.01)   *F16F 15/20* (2006.01)
*F04D 29/66* (2006.01)

(86) Numéro de dépôt international:
**PCT/FR2002/001593**

(87) Numéro de publication internationale:
**WO 2002/092969 (21.11.2002 Gazette 2002/47)**

(54) **STRUCTURE COMPRENANT UN ROTOR ET DES SOURCES DE PERTURBATIONS FIXES ET PROCEDE DE REDUCTION DE VIBRATIONS DANS CETTE STRUCTURE**

STRUKTUR MIT EINEM ROTOR FESTSTEHENDEN STÖRUNGSQUELLEN UND VERFAHREN ZUR REDUKTION VON VIBRATIONEN IN EINER SOLCHEN STRUKTUR DIE

STRUCTURE COMPRISING A ROTOR AND FIXED PERTURBATION SOURCES AND METHOD FOR REDUCING VIBRATIONS IN SAID STRUCTURE

(84) Etats contractants désignés:
**AT BE CH CY DE DK ES FI FR GB GR IE IT LI LU MC NL PT SE TR**

(30) Priorité: **11.05.2001 FR 0106237**

(43) Date de publication de la demande:
**04.02.2004 Bulletin 2004/06**

(73) Titulaire: **SNECMA**
**75015 Paris (FR)**

(72) Inventeurs:
• **BERTHILLIER, Marc**
**F-25000 Besancon (FR)**
• **CLOAREC, Yvon**
**F-77830 Echouboulans (FR)**
• **SEINTURIER, Eric**
**F-77590 Chartrettes (FR)**

(74) Mandataire: **Boura, Olivier et al**
**Cabinet Beau de Loménie**
**158, rue de l'Université**
**75340 Paris Cedex 07 (FR)**

(56) Documents cités:
| | |
|---|---|
| EP-B- 1 111 191 | WO-A2-00/08326 |
| FR-A- 2 617 914 | GB-A- 777 955 |
| US-A- 1 534 721 | US-A- 3 006 603 |
| US-A- 3 169 747 | US-A- 3 883 264 |
| US-A- 4 253 800 | US-A- 5 342 167 |
| US-A- 5 470 200 | US-A- 5 993 161 |

EP 1 386 058 B2

# Description

<u>DOMAINE DE L'INVENTION</u>

La présente invention concerne, de manière générale, la réduction de vibrations dans une structure comprenant un rotor et des sources de perturbation fixes. Par l'expression « réduction de vibrations » on entend une réduction de l'amplitude des vibrations.

Le rotor et les sources de perturbation fixes de la structure sont placés dans un écoulement de fluide. Les sources de perturbation fixes sont, par exemple, des aubes d'un stator. Selon une application particulière de l'invention, la structure précitée est une turbomachine.

Les sources de perturbation fixes génèrent dans l'écoulement de fluide des variations de pression qui peuvent se propager dans l'ensemble de la structure, en aval comme en amont, et faire vibrer le rotor.

<u>DESCRIPTION DE LA TECHNIQUE ANTERIEURE</u>

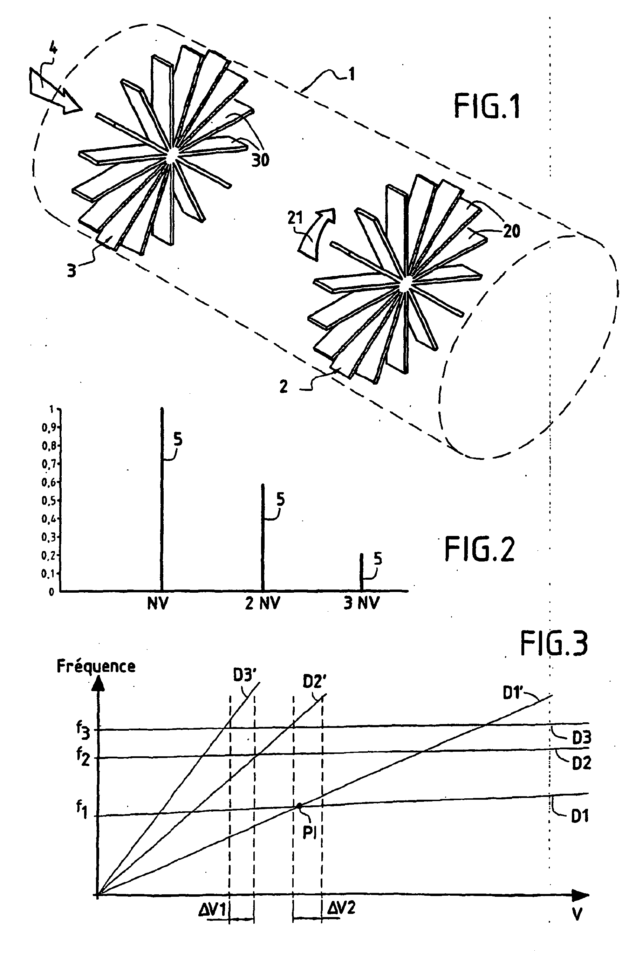

La figure 1 montre une structure conventionnelle, désignée par le repère 1, comprenant un rotor 2 et un stator 3 soumis à un écoulement de fluide 4. Le rotor 2 et le stator 3 comprennent respectivement des aubes 20 et 30 disposées radialement de manière uniforme, c'est-à-dire que l'angle entre deux aubes données est constant. Les aubes 20 et 30 servent, de façon bien connue, à modifier la pression du fluide, pour soit le compresser soit le détendre. Le rotor 2, en tournant comme indiqué par la flèche 21, voit les sillages respectifs des aubes 30 du stator 3 dans l'écoulement de fluide 4 comme des perturbations tournantes.

Plus particulièrement, en désignant le nombre d'aubes de stator 30 par N et la vitesse de rotation du rotor 2, exprimée en Hz, par V, le rotor 2 subit une excitation présentant une fréquence fondamentale NV, une première fréquence harmonique 2NV, une seconde fréquence harmonique 3NV, et ainsi de suite.

La figure 2 montre le spectre de l'excitation issue du stator 3 telle que reçue par le rotor 2. Ce spectre comporte trois raies 5, correspondant respectivement à la fréquence fondamentale et aux deux premières fréquences harmoniques. Dans l'exemple illustré à la figure 2, la partie de l'excitation correspondant aux harmoniques supérieures à la fréquence 3NV est négligée.

La réponse du rotor 2 à cette excitation est fonction des fréquences propres du rotor, lesquelles dépendent de la géométrie, du matériau et de la vitesse de rotation du rotor. Si, à une vitesse de rotation donnée, les fréquences propres du rotor ne coïncident avec aucune des raies 5 illustrées à la figure 2, le rotor, lorsqu'il fonctionne à cette vitesse, est peu perturbé par les sillages des aubes 30 dans l'écoulement 4. Si, au contraire, à cette même vitesse, l'une des fréquences propres du rotor 2 coïncide avec l'une ou l'autre des raies 5, le rotor 2 subit une résonance qui le fait vibrer. Or les vibrations du rotor 2 doivent être évitées autant que possible car elles peuvent entraîner des dommages pouvant conduire à la rupture en fatigue vibratoire de celui-ci.

En règle générale, notamment dans le cas des turbomachines, le rotor 2 doit pouvoir être utilisé dans toute une plage de vitesses de rotation, afin de permettre l'existence de plusieurs régimes de fonctionnement. La figure 3 montre un diagramme de Campbell représentant, par des droites Di, la relation entre les fréquences propres du rotor, désignées par $f_i$, et la vitesse de rotation V du rotor, et, par des droites D1', D2' et D3', la relation entre les fréquences d'excitation: NV, 2NV et 3NV et ladite vitesse de rotation V du rotor. Pour la clarté du dessin, seulement trois fréquences propres $f_1$, $f_2$ et $f_3$ et trois droites correspondantes D1, D2 et D3 ont été représentées à la figure 3.

Deux situations peuvent se présenter selon la plage de vitesses de rotation du rotor :

- si le rotor tourne dans une plage de vitesses ΔV1 dans laquelle aucune coïncidence ne se produit entre les fréquences propres $f_i$ du rotor 2 et les fréquences d'excitation NV, 2NV et 3NV, le rotor 2, en fonctionnement, est peu affecté par les perturbations engendrées dans l'écoulement de fluide par le stator 3 ;

- si, en revanche, la plage de vitesses de rotation du rotor 2 est une plage ΔV2 dans laquelle un ou plusieurs points de coïncidence existent entre les fréquences propres $f_i$ du rotor et les fréquences d'excitation NV, 2NV et 3NV (ces points de coïncidence correspondent à des points d'intersection PI, dont un seul est représenté à la figure 3, entre les droites Di et les droites D1', D2' et D3'), un effet de résonance se produit dans le rotor 2 en chacun de ces points de coïncidence.

Pour résoudre le problème des vibrations du rotor 2 dues aux aubes 30 du stator 3 lorsque, à une vitesse de rotation V donnée, une fréquence propre du rotor 2 coïncide avec une fréquence d'excitation NV, 2NV ou 3NV, il est connu de modifier la géométrie du rotor 2, en jouant sur sa masse et sa raideur, afin de changer ses fréquences propres.

Par cette méthode, on parvient effectivement à supprimer la ou les coïncidences gênantes. Cependant, il arrive fréquemment qu'en décalant ainsi les fréquences propres du rotor, d'autres coïncidences apparaissent dans la plage de vitesses de rotation. Il est même parfois quasiment impossible d'empêcher toute coïncidence entre les fréquences propres du rotor et les fréquences excitatrices à l'intérieur de cette plage de vitesses. D'autre part, les modifications géométriques du rotor entraînent souvent une dégradation de sa performance aérodynamique.

Dans les cas où la méthode ci-dessus est inappropriée, une solution alternative consiste à amortir les vibrations du rotor soit par friction ou cisaillement, soit par amortissement aéroélastique. Toutefois, l'amortissement par friction ou cisaillement est assez compliqué à réaliser, en particulier lorsque le rotor est monobloc. Quant à l'amortissement aéroélastique, il nécessite d'utiliser un rotor dissymétrique, par exemple du type décrit dans le document EP- A-0 921 274. Or, la tenue en rotation de tels rotors dissymétriques est difficile à assurer.

Pour réduire le bruit, on connaît du brevet US 3,883,264 une disposition particulière des aubes du stator dans laquelle les aubes sont inclinées circonférentiellement selon des directions différentes.

OBJECTIFS ET RESUME DE LA PRESENTE INVENTION

La présente invention vise à fournir un procédé de réduction de vibrations dans une structure comprenant un rotor et des sources de perturbation fixes, qui facilite la conception et la fabrication de ladite structure.

A cette fin, il est prévu un procédé de réduction de vibrations dans une structure comprenant au moins un rotor et au moins un stator, le rotor et le stator étant destinés à être soumis à un écoulement de fluide, la structure comprenant un ensemble de sources de perturbation fixes susceptibles d'entraîner des perturbations dans l'écoulement de fluide faisant vibrer le rotor, caractérisé en ce que, lors de la conception de la structure, on choisit une répartition angulaire non uniforme des sources de perturbation fixes de telle façon à réduire l'amplitude d'une excitation vue par le rotor et correspondant auxdites perturbations pour au moins une fréquence de l'excitation coïncidant sensiblement avec une fréquence propre du rotor à une vitesse de rotation V de celui-ci, par rapport à une répartition angulaire prédéterminée uniforme des sources de perturbation fixes, et en ce que le procédé comprend en outre une étape consistant à vérifier, dans toute une plage de vitesses de rotation auxquelles le rotor est susceptible de tourner, incluant la vitesse de rotation V, que l'amplitude maximale d'une réponse du rotor à l'excitation dans le cas où les sources de perturbation fixes sont réparties selon la répartition angulaire choisie est inférieure à celle dans le cas où les sources de perturbation fixes sont réparties selon la répartition angulaire prédéterminée, ladite réponse du rotor à l'excitation dans le cas où les sources de perturbation fixes sont réparties selon la répartition angulaire choisie étant obtenue en mettant en oeuvre les étapes suivantes :

déterminer un premier signal dont la transformée de Fourier correspond au spectre fréquentiel de l'excitation dans le cas où les sources de perturbation fixes sont réparties selon la répartition angulaire prédéterminée,

modifier le premier signal en un second signal, adapté à la répartition angulaire choisie des sources de perturbation fixes,

déterminer le spectre fréquentiel de l'excitation en calculant la transformée de Fourier du second signal, et

calculer la réponse du rotor à l'excitation sur la base du spectre fréquentiel de l'excitation.

Ainsi, selon l'invention, la réduction des vibrations du rotor est obtenue non pas en modifiant la structure ou la géométrie du rotor, comme dans la technique antérieure, mais en modifiant la répartition angulaire des sources de perturbation fixes, de manière à modifier en conséquence le spectre fréquentiel de l'excitation, telle que vue par le rotor, engendrée par les sources de perturbation fixes. Il n'est nullement besoin, selon l'invention, de rendre le rotor dissymétrique. La conception et la fabrication de la structure s'en trouvent donc facilitées, en ce sens que l'on évite les difficultés liées à la rotation d'un rotor dissymétrique. A la différence du rotor, l'ensemble de sources de perturbation est statique et peut être facilement rendu dissymétrique sans entraîner de problèmes de conception ou de fabrication particuliers.

Le fait d'utiliser une répartition angulaire non uniforme des sources de perturbation fixes a pour effet d'enrichir le spectre fréquentiel de l'excitation vue par le rotor de raies supplémentaires, par rapport à la configuration conventionnelle, telle qu'illustrée à la figure 1, où les sources de perturbation sont régulièrement réparties. Or, l'énergie de perturbation produite par l'ensemble de sources de perturbation selon l'invention est la même que celle qui serait produite par ces mêmes sources de perturbation si elles étaient réparties régulièrement. L'intensité des raies correspondant aux fréquences NV, 2NV, 3NV, etc., et en particulier de la raie gênante coïncidant avec la fréquence propre précitée du rotor, est donc réduite, ce qui affaiblit les vibrations du rotor.

Selon un mode de réalisation de l'invention, les sources de perturbation fixes sont identiques (aux tolérances de fabrication près) ; et au moins une fréquence propre du rotor, à la vitesse de rotation V, est sensiblement égale à NV ou à un multiple de NV, où N est le nombre de sources de perturbation fixes dans ledit ensemble. Par le terme « identiques », on entend que les sources de perturbation fixes produisent la même perturbation dans l'écoulement de fluide.

Typiquement, le premier signal comprend des bosses identiques espacées régulièrement, chaque bosse étant représentative d'une perturbation créée par une source de perturbation fixe, l'espacement entre deux bosses données consécutives étant représentatif de l'angle défini par deux sources de perturbation consécutives dans le cas où les sources de perturbation sont réparties selon la répartition angulaire uniforme, et l'étape de modification consiste à adapter les espacements entre les bosses aux angles de la répartition angulaire choisie.

En pratique, l'ensemble de sources de perturbation fixes peut être situé en amont ou en aval du rotor dans l'écoulement de fluide, mais est de préférence situé en amont car c'est dans cette situation que les perturbations engendrées par l'ensemble de sources de perturbation se propagent le mieux et sont le plus susceptibles d'affecter le rotor.

De préférence, les sources de perturbation fixes ont sensiblement une même position radiale par rapport à un point correspondant, dans l'écoulement de fluide, à un centre de rotation du rotor.

Selon une application particulière de l'invention, les sources de perturbation fixes sont des aubes de stator.

Selon une autre application, les sources de perturbation fixes sont de l'un des types suivants : injecteurs de chambre de combustion, éléments de prélèvement d'air de refroidissement, vannes de décharge, éléments de réintroduction d'air de refroidissement, capteurs et sondes.

Typiquement, la structure susmentionnée peut consister en une turbomachine.

La présente invention concerne également une utilisation du procédé de réduction de vibrations tel que défini précédemment pour la conception d'une structure comprenant au moins un rotor et au moins un stator, le rotor et le stator étant destinés à être soumis à un écoulement de fluide, la structure comprenant un ensemble de sources de perturbation fixes susceptibles d'entraîner des perturbations dans l'écoulement de fluide faisant vibrer le rotor.

La présente invention concerne également pour la conception et la fabrication d'une structure comprenant au moins un rotor et au moins un stator, le rotor et le stator étant destinés à être soumis à un écoulement de fluide, la structure comprenant un ensemble de sources de perturbation fixes susceptibles d'entraîner des perturbations dans l'écoulement de fluide faisant vibrer le rotor.

Dans le cas conventionnel d'aubes de stator identiques réparties régulièrement, les intensités des raies du spectre fréquentiel de l'excitation vue par le rotor lorsqu'il tourne à une vitesse de rotation donnée peuvent être importantes. Par conséquent, lorsqu'une fréquence propre du rotor, à cette même vitesse, coïncide avec l'une de ces raies, le rotor subit une résonance importante qui peut être très dommageable.

La présente invention vise donc également à fournir une structure comprenant un rotor et un ensemble de sources de perturbations fixes identiques, qui permette de réduire l'intensité des éventuels effets de résonance du rotor, en particulier d'empêcher que de tels effets puissent atteindre les valeurs d'intensité que l'on connaît avec les structures conventionnelles, et ce sans trop affecter l'efficacité aérodynamique de la structure.

A cette fin, il est prévu une structure selon la revendication 12.

Les expressions «angle supérieur» et «angle inférieur» se rapportent, selon l'invention, à une valeur d'angle qui est supérieure, respectivement inférieure, à une valeur donnée, une fois prises en compte les tolérances de fabrication. En d'autres termes, deux angles seront considérés comme égaux s'ils ont la même valeur, aux tolérances de fabrication près. De manière générale, les tolérances de fabrication sont inférieures à 0,05°.

Dans la structure selon l'invention définie ci-dessus, les sources de perturbation sont agencées de façon non uniforme, de sorte que le spectre fréquentiel de l'excitation vue par le rotor comporte, comme expliqué précédemment en relation avec le procédé selon l'invention, des raies supplémentaires par rapport à la configuration conventionnelle, telle qu'illustrée à la figure 1, où les sources de perturbation sont régulièrement réparties. Plus particulièrement, la partie de l'excitation correspondant à chaque angle majoré présente une fréquence fondamentale inférieure à la fréquence NV (c'est-à-dire la fréquence fondamentale dans le cas classique), tandis que la partie de l'excitation correspondant à chaque angle minoré présente une fréquence fondamentale supérieure à la fréquence NV.

L'énergie de perturbation produite par l'ensemble de sources de perturbation selon l'invention étant la même que celle qui serait produite par ces mêmes sources de perturbation si elles étaient réparties régulièrement, l'intensité des raies correspondant aux fréquences d'excitation NV, 2NV, 3NV, etc. est donc réduite, si bien que l'on diminue l'amplitude de la résonance du rotor lorsqu'une ou plusieurs fréquences propres de ce dernier coïncident avec une ou plusieurs fréquences d'excitation.

En outre, l'intensité de la raie maximale du spectre de l'excitation est réduite, si bien que l'on diminue le risque de voir le rotor résonner très fortement.

L'effet de réduction des intensités des raies gênantes du spectre de l'excitation correspondant aux fréquences NV, 2NV, 3NV, etc. est renforcé par le fait que, dans l'ensemble d'angles adjacents, des angles majorés (respectivement minorés) sont regroupés entre eux. En effet, lorsque le rotor tourne d'un angle correspondant à un groupe d'angles majorés (ou minorés), l'excitation qu'il reçoit comprend non seulement la fréquence correspondant à chaque angle majoré (ou minoré), mais également des fréquences multiples de cette fréquence.

De ce fait, il est possible de réduire l'intensité des raies gênantes du spectre sans qu'il soit nécessaire de trop modifier la géométrie de l'ensemble de sources de perturbation. Conserver une géométrie de l'ensemble de sources de perturbation la plus proche possible de la géométrie uniforme, dans laquelle la répartition angulaire des sources de perturbation est uniforme, évite que l'efficacité aérodynamique de la structure ne soit affectée dans une trop grande mesure.

L'ensemble d'angles adjacents comprend des angles dits nominaux égaux à 360°/N. La présence de plusieurs angles nominaux permet, en évitant une variation angulaire brutale entre les angles majorés et les angles minorés, de réduire la perte d'efficacité aérodynamique due au fait que la répartition angulaire des sources de perturbation n'est pas uniforme.

Selon l'invention, l'ensemble d'angles adjacents comprend un unique groupe d'angles adjacents majorés et un unique groupe d'angles adjacents minorés. Plus particulièrement, l'ensemble d'angles adjacents est constitué par :

un unique groupe d'angles adjacents majorés,
un premier groupe d'angles adjacents nominaux, adjacent au groupe d'angles adjacents majorés,
un unique groupe d'angles adjacents minorés, qui est adjacent audit premier groupe d'angles adjacents nominaux, et
un angle nominal supplémentaire ou un second groupe d'angles adjacents nominaux, adjacent au groupe d'angles adjacents minorés.

Le regroupement des angles majorés/minorés en un unique groupe, tel qu'il est mis en oeuvre dans le mode de réalisation préféré de l'invention, permet d'augmenter l'intensité des raies supplémentaires du spectre de l'excitation vue par le rotor, et de diminuer ainsi encore davantage l'intensité des raies correspondant aux fréquences NV, 2NV, 3NV, etc. Ce mode de réalisation préféré est donc particulièrement avantageux lorsque la fréquence propre du rotor coïncide avec l'une des fréquences précitées NV, 2NV, 3NV, etc. puisqu'il réduit de façon importante l'intensité de la raie gênante tout en n'affectant que peu l'efficacité aérodynamique de la structure (un effet satisfaisant est obtenu même si les angles majorés/minorés sont peu différents de 360°/N).

De préférence, tous les angles majorés de l'ensemble d'angles adjacents sont majorés d'une même valeur prédéterminée et tous les angles minorés de l'ensemble d'angles adjacents sont minorés de ladite valeur prédéterminée.

Toutefois, il peut être envisagé qu'au moins deux angles majorés et/ou au moins deux angles minorés de l'ensemble d'angles adjacents soient différents entre eux.

Typiquement, l'ensemble d'angles adjacents peut comprendre autant d'angles majorés que d'angles minorés.

Avantageusement, afin de ne pas entraîner de perte d'efficacité aérodynamique trop importante, chaque angle majoré et chaque angle minoré de l'ensemble d'angles adjacents diffère de 360°/N d'au plus 10%, et de préférence d'au plus 5%.

BREVE DESCRIPTION DES DESSINS

Dans les dessins annexés :

- la figure 1, déjà commentée, montre schématiquement en perspective une partie d'une turbomachine, comprenant un rotor et un stator;
- la figure 2, déjà commentée, montre le spectre fréquentiel d'une excitation vue par le rotor de la figure 1 ;
- la figure 3, déjà commentée, montre un diagramme de Campbell correspondant à la partie de turbomachine illustrée à la figure 1 ;
- la figure 4 est un organigramme d'un procédé de conception et de fabrication d'une turbomachine selon la présente invention ;
- la figure 5 montre schématiquement en perspective une partie d'une turbomachine, comprenant plusieurs étages stator-rotor ;
- la figure 6 montre schématiquement en vue de face un stator de la partie de turbomachine illustrée à la figure 5 ;
- la figure 7 montre un diagramme de Campbell correspondant à un étage stator-rotor de la partie de turbomachine illustrée à la figure 5 ;
- les figures 8 à 14 montrent différents exemples de répartition angulaire, conformes à la présente invention, de sources de perturbation présentes dans la partie de turbomachine illustrée à la figure 5 ;
- la figure 15 montre le spectre fréquentiel d'une excitation vue par un rotor de la partie de turbomachine illustré à la figure 5, dans le cas de la répartition angulaire représentée à la figure 10 ;
- la figure 16 est un organigramme d'une méthode de vérification conforme à la présente invention ;
- la figure 17 montre un signal temporel utilisé dans la méthode de la figure 16 ;
- la figure 18 montre un signal temporel modifié obtenu à partir du signal temporel de la figure 17 ; et
- la figure 19 montre un ensemble de sources de perturbation fixes selon une variante de la présente invention.

DESCRIPTION DE PLUSIEURS MODES DE REALISATION DE L'INVENTION

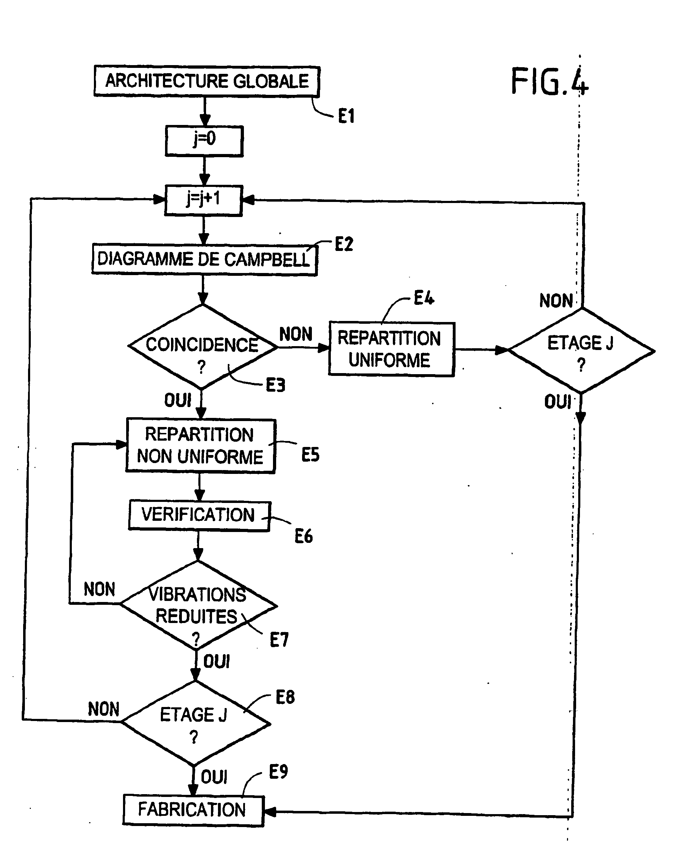

Un procédé de conception et fabrication d'une turbomachine selon la présente invention est maintenant décrit en détail en référence à la figure 4.

A une première étape E1, une architecture globale de la turbomachine est déterminée de manière bien connue, par simulation, à partir de spécifications initiales définissant, entre autres, la puissance et la consommation en énergie souhaitées. L'étape E1 consiste plus particulièrement à déterminer le nombre d'étages stator-rotor, le nombre d'aubes par étage et le profil des aubes permettant d'obtenir une performance aérodynamique répondant aux spécifications initiales.

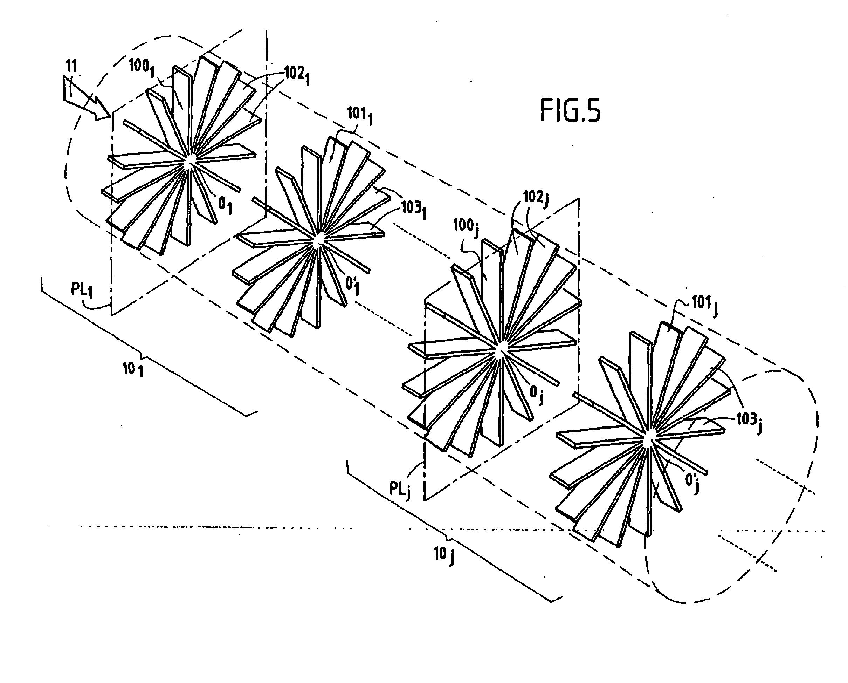

A l'issue de cette première étape, on obtient, sous forme de données numériques, une structure du type de celle illustrée à la figure 5, comprenant un nombre $J$ d'étages stator-rotor $10_1$ à $10_J$. Chaque étage $10_j$, où $j$ est un nombre entier compris entre 1 et J, comprend un stator $100_j$, se présentant sous la forme d'une roue aubagée fixe, et un rotor $101_j$, du type roue aubagée mobile. Les aubes de chaque stator $100_j$ sont désignées à la figure 5 par le repère $102_j$ et les aubes de chaque rotor $101_j$ par le repère $103_j$.

Les différents étages stator-rotor sont agencés pour, en fonctionnement, être traversés par un écoulement de fluide 11 en étant perpendiculaires à celui-ci. Dans chaque étage $10_j$, le stator $100_j$, situé en amont du

rotor associé $101_j$, génère des perturbations de pression dans l'écoulement 11 qui sont ensuite reçues par le rotor $101_j$. La réponse du rotor à ces perturbations dépend des fréquences d'excitation vues par le rotor et des fréquences propres de celui-ci.

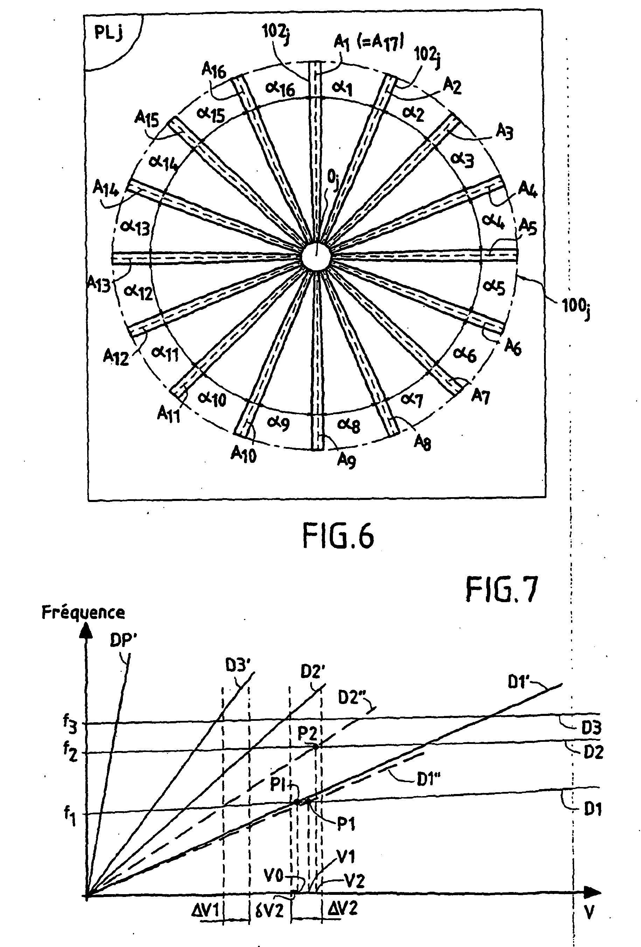

Les aubes de stator $102_j$ d'un étage donné constituent un ensemble d'un nombre N de sources de perturbation fixes et identiques (le nombre N pouvant varier d'un étage à l'autre). Aux figures 5 et 6, chaque stator (et rotor) a été représenté avec un nombre d'aubes égal à 16. En pratique, le nombre N est généralement compris entre 16 et 200.

Comme montré à la figure 5, les N sources de perturbation fixes $102_j$ définissent, dans un plan $PL_j$ perpendiculaire à la direction de l'écoulement de fluide 11, un ensemble de N angles de répartition adjacents $\alpha_1$ à $\alpha_N$, dont la somme est égale à 360°. Chaque angle $\alpha_i$, où, i est un entier compris entre 1 et N, est défini par des demi-droites $A_i$, $A_{i+1}$, ayant pour origine un même point $O_j$ situé sensiblement en vis-à-vis d'un point de rotation $O_j'$ du rotor associé $101_j$, et passant respectivement par les centres géométriques (non représentés) de deux aubes $102_j$ consécutives. Dans l'exemple de la figure 6, les demi-droites $A_1$ à $A_N$ sont des axes centraux des aubes $102_j$.

En référence de nouveau à la figure 4, après l'étape E1, sont mises en oeuvre, pour chaque étage stator-rotor $10_j$, des étapes E2 à E7.

A l'étape E2, les fréquences propres du rotor, désignées par $f_i$, sont calculées puis portées sur un diagramme de Campbell sous la forme de droites Di représentant la relation entre ces fréquences propres et la vitesse de rotation V du rotor, exprimée en Hz (cf. figure 7). Sur ce même diagramme de Campbell, sont tracées également des droites D1' à DP', où P est un nombre entier prédéterminé, passant par l'origine du diagramme et ayant pour pentes respectives N, 2N, 3N, ..., PN. Les droites D1' à DP' représentent la relation entre les fréquences d'excitation vues par le rotor $101_j$ lorsque les aubes $102_j$ du stator $100_j$ sont régulièrement réparties (c'est-à-dire lorsque les angles $\alpha_1$ à $\alpha_N$ sont égaux), comme illustré à la figure 6. Le choix du nombre prédéterminé P dépend de la mesure dans laquelle on souhaite réduire les vibrations du rotor. En pratique, en particulier dans le cas des turbomachines, il a été observé que les résonances impliquant les fréquences d'excitation d'ordre supérieur à 3 ont une intensité suffisamment faible pour pouvoir être négligées. On peut donc le plus souvent se contenter des trois premières fréquences d'excitation (P=3). En ce qui concerne les fréquences propres du rotor, on peut se limiter aux seules fréquences propres susceptibles d'entrer en coïncidence avec au moins l'une des fréquences d'excitation N, 2N, 3N, ..., PN dans une plage de vitesses de rotation auxquelles le rotor est destiné à tourner. Pour la clarté du dessin, seulement trois fréquences propres $f_1$, $f_2$ et $f_3$ et trois droites correspondantes D1, D2 et D3 ont été représentées à la figure 7.

Les étapes E1 et E2 sont, en soi, bien connues de l'homme du métier et n'ont donc pas besoin d'être décrites plus en détail.

A l'étape suivante E3, on identifie, dans le diagramme de Campbell, les éventuelles coïncidences entre les fréquences propres du rotor et les fréquences d'excitation, dans la plage de vitesses de rotation auxquelles le rotor est destiné à tourner.

Si la plage de vitesses de rotation du rotor est du type de la plage $\Delta V1$ illustrée à la figure 7, dans laquelle aucune coïncidence n'est identifiée (ce qui signifie que, si des coïncidences impliquant; des fréquences d'excitation d'ordre supérieur à P=3 peuvent exister en théorie, elles ne donnent pas lieu à des effets de résonance importants), une répartition angulaire uniforme est choisie pour les sources de perturbation fixes, à l'étape E4. Selon cette répartition uniforme, les angles $\alpha_1$ à $\alpha_N$ sont tous égaux entre eux, et le stator est du type de celui montré à la figure 6.

Si une ou plusieurs coïncidences existent, comme dans le cas de la plage de vitesses de rotation $\Delta V2$ montrée à la figure 7, une répartition angulaire non uniforme est choisie pour les sources de perturbation fixes, à l'étape E5, afin de modifier le spectre de l'excitation vue par le rotor et éviter que les perturbations engendrées par le stator ne viennent: trop fortement exciter le rotor. Dans l'exemple de la figure 7, une coïncidence existe entre la fréquence propre $f_1$ du rotor et la fréquence d'excitation NV à une vitesse V0 dans la plage $\Delta V2$. Cette coïncidence est matérialisée par le point d'intersection PI entre les droites D1 et D1'.

Des exemples de types de répartition pouvant être choisis pour la mise en oeuvre de l'étape E5 sont exposés ci-dessous.

Dans tout ce qui suit, on entendra par « angle nominal:» un angle égal à 360°/N, par « angle majoré », un angle supérieur à 360°/N et par « angle minoré » un angle inférieur à 360°/N. Dans les figures, le symbole « = » représentera un angle nominal, le symbole « + » un angle majoré et le symbole « - » un angle minoré.

Premier type de répartition :

Selon un premier type de répartition, l'ensemble d'angles adjacents est constitué de :

- un unique groupe d'angles adjacents majorés, égaux à (360°/N)+c, et
- un unique groupe d'angles adjacents minorés, égaux à (360°/N)-c,

où c est un nombre réel tel que 0 < c < 360°/N.

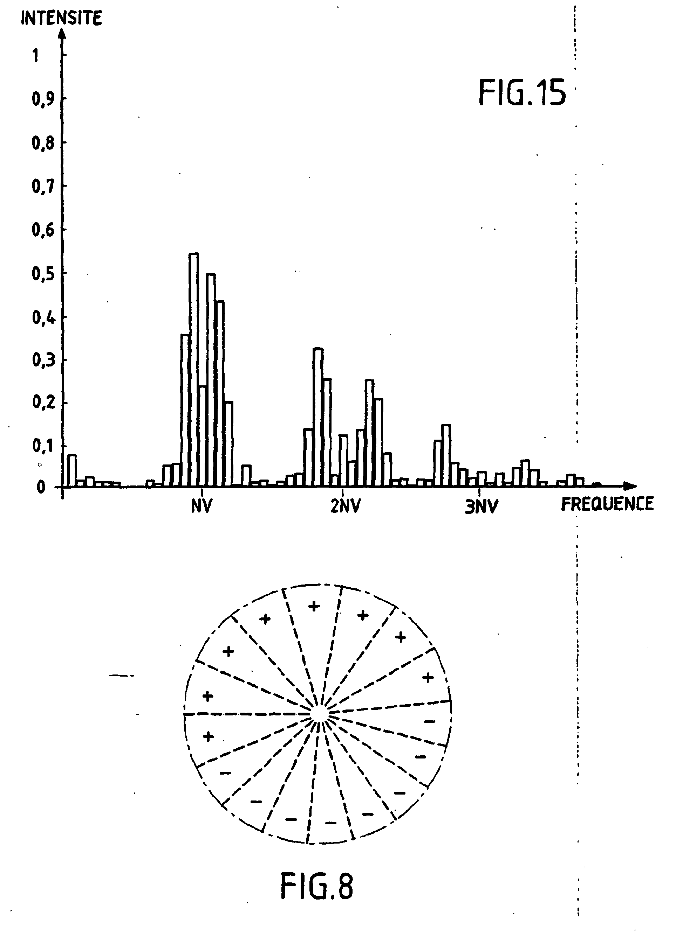

La figure 8 illustre un exemple de ce type de répartition.

Second type de répartition :

Selon un second type de répartition, l'ensemble d'angles adjacents est constitué de :

- un unique groupe d'angles adjacents majorés, égaux à (360°/N)+c,
- un unique groupe d'angles adjacents minorés, égaux à (360°/N)-c, ce groupe étant adjacent au .groupe d'angles majorés, et
- un angle nominal ou un groupe d'angles adjacents nominaux, intercalé entre le groupe d'angles adjacents majorés et le groupe d'angles adjacents minorés,

où c est un nombre réel tel que 0 < c < 360°/N.

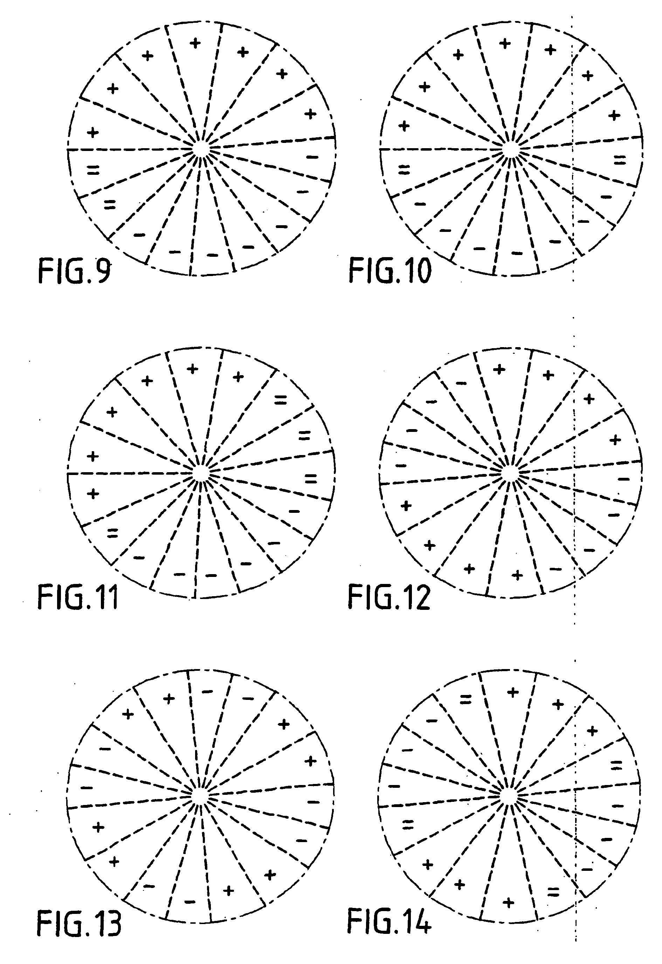

La figure 9 montre un exemple de ce type de répartition, comportant un groupe de deux angles adjacents nominaux.

Troisième type de répartition :

Selon un troisième type de répartition, l'ensemble d'angles adjacents est constitué de :

- un unique groupe d'angles adjacents majorés, égaux à (360°/N)+c,
- un premier angle nominal ou un premier groupe d'angles adjacents nominaux, adjacent au groupe précité d'angles adjacents majorés,
- un unique groupe d'angles adjacents minorés, égaux à (360°/N)-c, ce groupe étant adjacent audit premier angle nominal ou premier groupe d'angles adjacents nominaux, et
- un second angle nominal ou un second groupe d'angles adjacents nominaux, adjacent aux groupes précités d'angles adjacents minorés et d'angles adjacents majorés,

où c est un nombre réel tel que 0 < c < 360°/N.

La figure 10 montre un exemple de ce type de répartition, comportant deux angles nominaux séparés, intercalés chacun entre les groupes d'angles adjacents majorés et minorés.

La figure 11 montre un autre exemple de ce type de répartition, comportant un angle nominal intercalé entre les groupes d'angles adjacents majorés et minorés, et un groupe d'angles adjacents nominaux, opposé à l'angle nominal, et également intercalé entre les groupes d'angles adjacents majorés et minorés.

Quatrième type de répartition :

Selon un quatrième type de répartition, l'ensemble d'ahgles adjacents est constitué de :

- plusieurs groupes d'angles adjacents majorés, chaque angle majoré étant égal à (360°/N)+c, et
- plusieurs groupes, intercalés entre les groupes d'angles adjacents majorés, d'angles adjacents minorés, chaque angle minoré étant égal à (360°/N)-c,

où c est un nombre réel tel que 0 < c < 360°/N.

Les figures 12 et 13 montrent des exemples de ce type de répartition.

Cinquième type de répartition :

Selon un cinquième type de répartition, l'ensemble d'angles adjacents est constitué de :

- plusieurs groupes d'angles adjacents majorés, chaque angle majoré étant égal à (360°/N)+c,
- plusieurs groupes, intercalés entre les groupes d'angles adjacents majorés, d'angles adjacents minorés, chaque angle minoré étant égal à (360°/N)-c, et
- au moins un angle nominal,

où c est un nombre réel tel que 0 < c < 360°/N..

La figure 14 montre un exemple de ce type de répartition.

Sixième type de répartition :

Selon un sixième type de répartition, l'ensemble d'angles adjacents est constitué de :

- plusieurs groupes d'angles adjacents majorés, chaque angle majoré étant égal à (360°/N)+c,
- plusieurs groupes, intercalés entre les groupes d'angles adjacents majorés, d'angles adjacents minorés, chaque angle minoré étant égal à (360°/N)-c,
- plusieurs angles nominaux ou plusieurs groupes d'angles adjacents nominaux, chaque angle nominal ou chaque groupe d'angles adjacents nominaux étant adjacent à la fois à l'un desdits groupes d'angles adjacents majorés et à l'un desdits groupes d'angles adjacents minorés,

où c est un nombre réel tel que 0 < c < 360°/N.

Le schéma de la figure 14 est également un exemple de ce type de répartition.

Autres types de répartition:

Dans chacun des six types de répartition exposés ci-dessus, les angles majorés (respectivement minorés) sont tous égaux entre eux, et le nombre total d'angles majorés est nécessairement égal à celui des angles minorés. Ainsi, en particulier, le nombre N de sources de perturbation dans les premier et quatrième types de répartition est nécessairement pair.

Toutefois, il est possible de modifier ces six types de répartition de sorte que les angles majorés (respectivement minorés) ne soient pas tous égaux entre eux. En d'autres termes, chacun des six types de répartition ci-dessus peut être modifié de telle sorte que la valeur c ne soit plus constante, mais puisse au contraire différer d'un angle à l'autre. Dans ce cas, le nombre d'angles majorés peut être différent du nombre d'angles minorés.

Dans les types de répartition décrits ci-dessus, ceux comportant un ou plusieurs angles nominaux sont préférés. La présence d'angles nominaux évite en effet les variations angulaires brutales entre angles majorés et angles minorés qui peuvent être néfastes pour la performance aérodynamique du stator.

En outre, pour les mêmes raisons d'efficacité aérodynamique, il est préférable que les angles majorés (respectivement les angles minorés) diffèrent de 360°/N d'au plus 10% voire même d'au plus 5%, c'est-à-dire que la valeur c soit inférieure ou égale à 36/N voire inférieure ou égale à 18/N.

Les types de répartition décrits ci-dessus ont tous en commun, d'une part, d'être non réguliers, et, d'autre part, de comporter au moins deux angles majorés adjacents l'un à l'autre et au moins deux angles minorés adjacents l'un à l'autre.

Par rapport à la configuration conventionnelle où les sources de perturbation sont régulièrement réparties (cf. figure 1), le spectre fréquentiel de l'excitation, telle que vue par le rotor, produite par ces mêmes sources de perturbation, mais réparties de façon non uniforme, comporte des raies supplémentaires. En effet, chaque angle majoré fait participer, dans le spectre fréquentiel de l'excitation, des raies de fréquences :

$$(360°/ ((360°/N)+c))V,$$
$$2x(360°/ ((360°/N)+c))V,$$
$$3x(360°/ ((360°/N)+c))V,$$
etc.,

et chaque angle minoré fait participer des raies de fréquences :

$$(360°/((360°/N)-c))V,$$
$$2x(360°/((360°/N)-c))V,$$
$$3x(360°/((360°/N)-c))V,$$
etc..

Cet enrichissement en raies supplémentaires s'accompagne d'un affaiblissement de l'intensité des raies correspondant aux fréquences d'excitation NV à PNV, et donc, en particulier, dans l'exemple de la figure 7, de la raie gênante correspondant à la fréquence NV, en coïncidence avec la fréquence propre f1 au point PI (lorsque la vitesse de rotation V est égale à V0). L'intensité de la résonance due à la fréquence gênante NV0 est ainsi réduite. Le rotor 2 vibrera donc moins que dans le cas conventionnel lorsque, en fonctionnement, il tournera à la vitesse V0.

Cet effet est renforcé par le fait qu'au moins deux angles majorés sont adjacents l'un à l'autre et au moins deux angles minorés sont adjacents l'un à l'autre. Un tel regroupement des angles majorés (respectivement minorés) entre eux, contribue à augmenter l'intensité des raies de fréquences multiples de la fréquence $(360°/((360°/N)+c))V$ (respectivement $(360°/((360°/N)-c))V)$.

La figure 15 montre, à titre d'illustration, le spectre de l'excitation vue par le rotor, dans le cas de l'exemple de répartition montré à la figure 10. A la figure 15, l'intensité des raies est normée par rapport à l'intensité de la raie de fréquence NV dans le spectre de la figure 2, correspondant au cas conventionnel. L'intensité maximale de valeur 1 correspond donc à l'intensité de la raie de fréquence NV dans le cas Où les N sources de perturbation sont réparties régulièrement. On notera, dans la figure 15, que :

- les intensités des raies du spectre de l'excitation sont toutes bien inférieures à 1, et donc inférieures à l'intensité de la raie de fréquence NV dans le cas conventionnel, et
- les intensités de la raie de fréquence NV (respectivement 2NV, 3NV) et des raies de fréquences voisines de NV (respectivement 2NV, 3NV) sont toutes bien inférieures à l'intensité de la raie de fréquence NV (respectivement 2NV, 3NV) dans le cas conventionnel.

Il en découle que les amplitudes des résonances susceptibles de se produire lorsque la turbomachine sera en fonctionnement sont réduites par rapport au cas conventionnel.

Dans certains cas assez rares, il peut toutefois arriver qu'en modifiant la répartition angulaire des sources de perturbation à l'étape E5 du procédé selon l'invention pour écarter une coïncidence gênante entre une fréquence propre du rotor et une fréquence d'excitation, les vibrations du rotor ne diminuent pas. De telles situations peuvent se produire uniquement dans des conditions très spécifiques, à savoir lorsque, à une vitesse de rotation donnée du rotor, des effets de résonance dus à de nouvelles raies se cumulent d'une manière telle qu'ils égalent ou dépassent l'effet de résonance initial.

A l'étape E6 du procédé selon l'invention, il est donc prévu de vérifier que la répartition choisie à l'étape précédente E5 entraîne bien une diminution des vibrations du rotor.

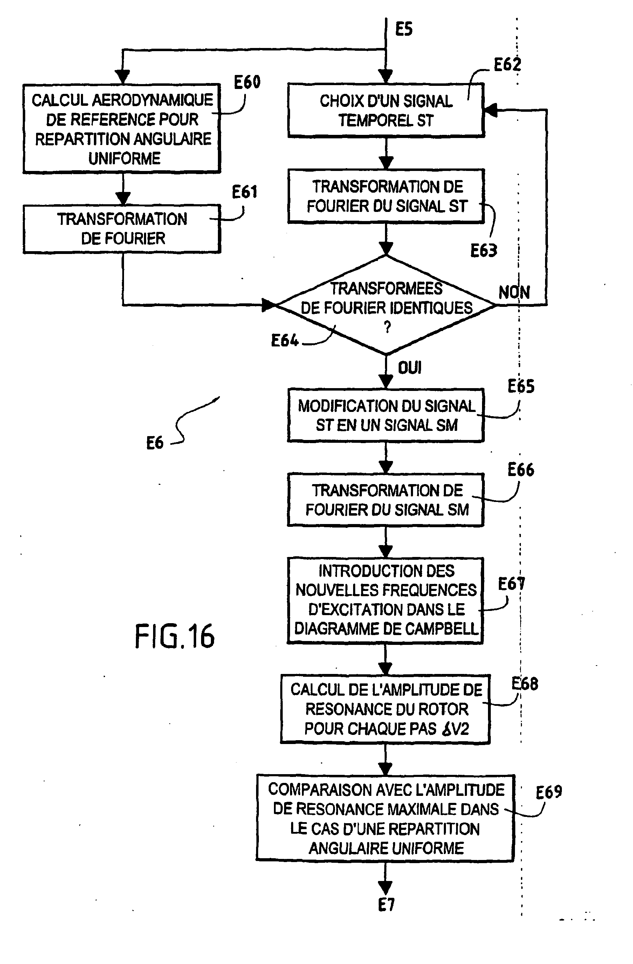

L'étape E6 est mise en oeuvre selon une méthode qui est illustrée en détail à la figure 16. Cette méthode consiste de manière générale à calculer, dans un premier temps, les spectres fréquentiels de l'excitation vue par le rotor dans le cas conventionnel d'une répartition angulaire uniforme des sources de perturbation (figure 2) et dans le cas de la répartition angulaire non uniforme choisie à l'étape E5 (figure 15), puis à comparer les amplitudes de résonance obtenues dans les deux cas.

Plus précisément, à des étapes E60 et E61, on détermine le spectre fréquentiel de l'excitation vue par le rotor lorsque la répartition angulaire des sources de perturbation est uniforme, par un calcul aérodynamique de type connu (étape E60) suivi d'une transformation de Fourier (étape E61).

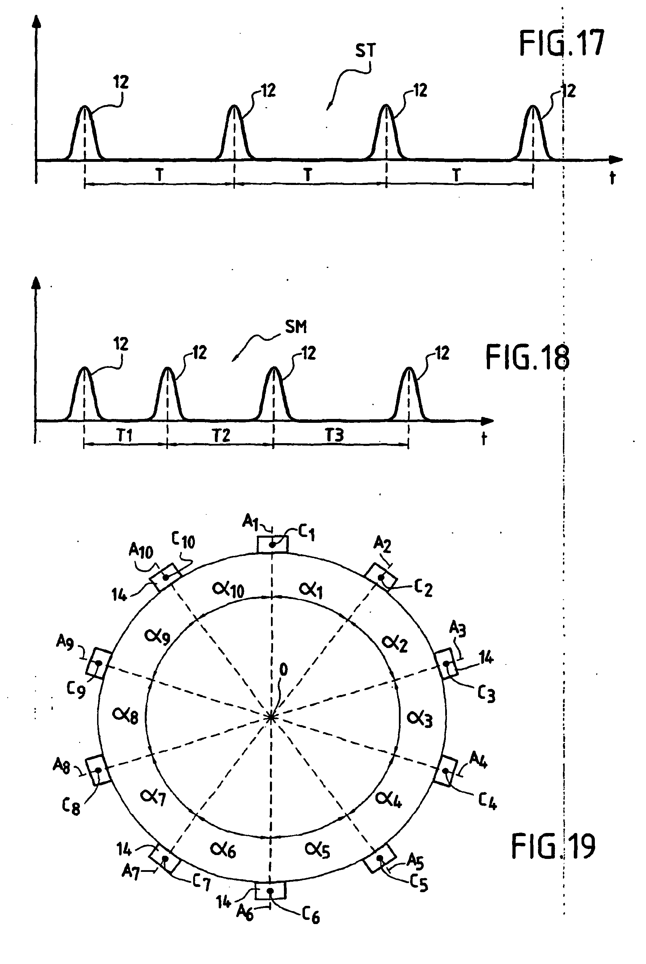

A une étape E62, on choisit un signal temporel ou angulaire ST représentatif de l'évolution dans le temps de l'excitation vue par le rotor ou, ce qui revient au même, de l'évolution de l'excitation vue par le rotor en fonction de l'angle de rotation du rotor. Comme montré à la figure 17, le signal ST comprend des bosses identiques 12, par exemple en forme de gaussiennes, et est périodique. La période T de ce signal, dans le cas d'un signal temporel, est égale à $\alpha/(360°xV)$, où $\alpha$ est l'angle, constant, défini par deux sources de perturbation (en l'occurrence deux aubes de stator) consécutives. Chaque bosse 12 représente la perturbation induite par une source de perturbation.

A une étape E63, une transformation de Fourier est appliquée au signal ST.

A une étape suivante E64, la transformée de Fourier obtenue à l'étape E63 est comparée à celle obtenue à l'étape E61. Si les deux transformées de Fourier sont identiques, une étape E65 est mise en oeuvre. Sinon, on modifie le signal temporel ST (étape E62), en jouant sur la forme (commune) des bosses 12 jusqu'à obtenir un signal ST dont la transformée de Fourier corresponde à celle obtenue à l'étape E61.

A l'étape E65, le signal temporel ST est modifié en un signal SM, montré à la figure 18, en fonction de la modification apportée à la répartition angulaire des sources de perturbation à l'étape E5 du procédé selon l'invention. Plus particulièrement, comme montré à la figure 18, l'espacement entre deux bosses consécutives est adapté à la nouvelle répartition angulaire, non uniforme, des sources de perturbation. Ainsi, cet espacement n'est plus constant comme dans le cas de la figure 17, mais varie en fonction des angles de la répartition des sources de perturbation. Dans l'exemple de la figure 18, les intervalles de temps T1, T2 et T3 satisfont aux relations suivantes :

$$T1 = \alpha min / (360°xV),$$

$$T2 = \alpha nom / (360°xV),$$

$$T3 = \alpha maj / (360°xV),$$

où $\alpha min$, $\alpha nom$ et $\alpha maj$ désignent respectivement un angle minoré, un angle nominal et un angle majoré.

A une étape suivante E66 de la méthode illustrée à la figure 16, une transformation de Fourier est appliquée au signal temporel modifié SM. On obtient ainsi un spectre du type de celui illustré à la figure 15. Sur la figure 15, comme expliqué précédemment, l'échelle des intensités sur l'axe des ordonnées est la même que celle de la figure 2. L'intensité maximale, normée à la valeur 1, correspond dans les deux figures à l'intensité de la raie de fréquence NV dans le cas conventionnel. L'énergie globale de l'excitation engendrée par les sources de perturbation étant constante quelle que soit la répartition angulaire desdites sources de perturbation, on connaît donc avec précision l'intensité relative de chaque raie de la figure 15 par rapport aux intensités des raies selon le cas conventionnel (figure 2).

Les étapes E60 à E66 selon l'invention permettent donc d'obtenir le spectre de l'excitation vue par le rotor dans le cas d'une répartition angulaire non uniforme des sources de perturbation en s'affranchissant des calculs très longs et complexes qui seraient nécessaires si ce spectre était déterminé directement par des calculs aérodynamiques.

A une étape suivante E67, on trace dans le diagramme de Campbell des droites (dont deux, désignées par les repères D1"et D2", sont montrées en traits pointillés à la figure 7) représentant la relation entre les nouvelles fréquences apparues dans le spectre fréquentiel de l'excitation, c'est-à-dire les fréquences autres que les fréquences NV, 2NV, 3NV, etc., et la vitesse de rotation du rotor. Ensuite, les éventuelles coïncidences entre ces nouvelles fréquences et les fréquences propres du rotor sont identifiées dans la plage $\Delta V2$ de vitesses de rotation auxquelles le rotor est destiné à tourner.

A la figure 7 sont représentés, à titre d'illustration, des points P1 et P2 d'intersection entre les droites D1 et D1" et entre les droites D2 et D2", respectivement. En chacun des points de coïncidence P1 et P2, qui correspondent à des vitesses de rotation respectives V1 et V2, le rotor subit une résonance. Si les vitesses de rotation V1 et V2 sont proches l'une de l'autre, les effets de résonance aux points P1 et P2 peuvent se cumuler partiellement.

Selon l'invention, on détermine à une étape E68, pour chaque vitesse de rotation dans la plage $\Delta V2$, si un ou plusieurs points de coïncidence existent, et si tel est le cas, on calcule l'amplitude de la résonance globale du rotor, à cette vitesse de rotation, par une technique connue de superposition modale. Plus précisément, la plage $\Delta V2$ est décomposée en pas de vitesse étroits $\delta V2$, la largeur de chaque pas dépendant de l'amortissement du rotor (soit environ 0,5% de la vitesse V). Une amplitude de résonance globale du rotor est calculée par superposition modale pour chacun des pas $\delta V2$, puis comparée à l'amplitude de résonance dans le cas conventionnel lorsque le rotor tourne à la vitesse V0 (étape E69).

Si, pour chaque pas $\delta V2$, l'amplitude de résonance globale du rotor est inférieure à l'amplitude de résonance maximale dans le cas conventionnel, la répartition angulaire non uniforme choisie à l'étape E5 est validée, et l'on recommence ensuite les étapes E2 à E6 pour l'étage stator-rotor suivant (cf. les étapes E7 et E8 à la figure 4).

Si, exceptionnellement, l'une des amplitudes de résonance globale égale ou dépasse l'amplitude de résonance maximale dans le cas conventionnel, on revient à l'étape E5 pour choisir une autre répartition angulaire non uniforme, et l'on recommence l'étape de vérification E6 (sans remettre en oeuvre, bien-sûr, les étapes E60 et E61).

Lorsque les étapes E2 à E7 illustrées à la figure 4 ont été mises en oeuvre pour tous les étages stator-rotor (étape E8), la turbomachine telle que conçue ci-dessus, se présentant sous la forme de données numériques de simulation, est fabriquée (étape E9).

Dans les différents modes de réalisation de l'invention décrits ci-dessus, les sources de perturbation sont constituées par des aubes de stator. Il a cependant été observé par les présents inventeurs que le principe de l'invention peut être appliqué à d'autres types de sources de perturbation se trouvant dans une turbomachine, tels que des injecteurs de chambre de combustion, des éléments de prélèvement d'air de refroidissement, des vannes de décharge, des éléments de réintroduction d'air de refroidissement, des capteurs ou des sondes, placés en amont d'un ou plusieurs rotors de la turbomachine.

La figure 19 illustre schématiquement un ensemble de N sources de perturbation 14 de l'un des types précités (dans l'exemple de la figure 19, le nombre N de sources de perturbation est égal à 10), faisant partie d'un stator. Comme dans le cas des aubes de stator (figure 6), les sources de perturbation 14 sont identiques aux tolérances de fabrication près et sont réparties selon des angles adjacents $\alpha_1$ à $\alpha_N$, dont la somme est égale à 360°, définis chacun par des demi-droites $A_i$, $A_{i+1}$, ayant pour origine un même point O correspondant sensiblement, dans l'écoulement de fluide 11, au(x) centre(s) de rotation du (des) rotor(s) situé(s) en aval, et passant respectivement par les centres géométriques $C_i$, $C_{i+1}$ de deux sources de perturbation consécutives.

Les sources de perturbation 14 ont généralement une même position radiale, c'est-à-dire qu'elles sont situées à une même distance du point O. L'ensemble de sources de perturbation 14 est disposé sensiblement perpendiculairement à l'écoulement de fluide, et induit, dans l'écoulement de fluide, des perturbations qui peuvent être reçues par le ou les rotors en aval.

Dans le cas de sources de perturbation du type de celles illustrées à la figure 19, le procédé selon l'invention, tel qu'illustré à la figure 4, est mis en oeuvre sensiblement de la même façon que lorsque les sources de perturbation sont constituées par des aubes de stator. Plus spécifiquement, pour chaque rotor affecté par les perturbations générées par les sources de perturbation 14, des étapes E2 à E7 identiques à celles montrées à la figure 4 sont mises en oeuvre.

Bien que la présente invention ait été décrite dans le cadre d'une turbomachine comportant plusieurs rotors, il apparaîtra clairement à l'homme du métier que le principe de l'invention peut être appliqué à n'importe quelle structure comprenant au moins un rotor et au moins un ensemble de sources de perturbation fixes susceptibles de perturber le ou les rotors. Lorsque la structure comporte plusieurs ensembles de sources de perturbation, il convient préalablement d'identifier, pour le ou chaque rotor, quel ensemble de sources de perturbation génère, vu du rotor, les plus fortes perturbations. Dans la configuration illustrée à la figure 5, cet ensemble est généralement la roue aubagée fixe située juste en amont du rotor. S'il ne se trouve aucune roue aubagée fixe en amont du rotor et suffisamment proche de celui-ci pour le perturber, il convient de déterminer s'il existe des sources de perturbation du type injecteurs de chambre de combustion, éléments de prélèvement d'air de refroidissement, vannes de décharge, éléments de réintroduction d'air de refroidissement, capteurs ou sondes, en amont du rotor. Si tel est le cas, les sources de perturbation les plus gênantes seront généralement celles qui sont les plus proches du rotor, en amont de celui-ci.

Bien que, pour un rotor donné, les sources de perturbation les plus gênantes soient le plus souvent situées en amont du rotor, il est des situations où le rotor est perturbé principalement par des sources de perturbation placées en aval (en particulier lorsqu'aucun ensemble de sources de perturbation n'est présent en amont du rotor). La présente invention n'est donc pas limitée à une position relative particulière de l'ensemble de sources de perturbation par rapport au rotor.

De manière générale, l'homme du métier comprendra que l'invention n'est pas limitée aux seuls exemples décrits, et qu'en particulier, un principe du procédé selon l'invention consiste à choisir une répartition angulaire des sources de perturbation fixes de telle façon à réduire l'amplitude de l'excitation vue par le rotor pour au moins une fréquence de l'excitation coïncidant sensiblement avec une fréquence propre du rotor à une vitesse de rotation V de celui-ci, par rapport à une répartition angulaire initialement envisagée.

**Revendications**

1. Procédé de réduction de vibrations dans une structure comprenant au moins un rotor ($101_j$) et au moins un stator ($100_j$), le rotor et le stator étant destinés à être soumis à un écoulement de fluide (11), la structure comprenant un ensemble de sources de perturbation fixes ($102_j$; 14) susceptibles d'entraîner des perturbations dans l'écoulement de fluide faisant vibrer le rotor, **caractérisé en ce que** :

   lors de la conception de la structure, on choisit (E5) une répartition angulaire non uniforme des sources de perturbation fixes de telle façon à réduire l'amplitude d'une excitation vue par le rotor et correspondant auxdites perturbations pour au moins une fréquence de l'excitation coïncidant sensiblement avec une fréquence propre du rotor à une vitesse de rotation V de celui-ci, par rapport à une répartition angulaire prédéterminée uniforme des sources de perturbation fixes,

et **en ce que** ledit procédé comprend en outre une étape (E6) consistant à vérifier, dans toute une plage ($\Delta$V2) de vitesses de rotation auxquelles le rotor ($101_j$) est susceptible de tourner, incluant la vitesse de rotation V, que l'amplitude maximale d'une réponse du rotor à l'excitation dans le cas où les sources de perturbation fixes sont réparties selon ladite répartition angulaire choisie est inférieure à celle dans le cas où les sources de perturbation fixes sont réparties selon ladite répartition angulaire prédéterminée, ladite réponse du rotor à l'excitation dans le cas où les sources de perturbation fixes sont réparties selon ladite répartition angulaire choisie étant obtenue en mettant en oeuvre les étapes suivantes :

déterminer (E60-E64) un premier signal (ST) dont la transformée de Fourier correspond au spectre fréquentiel de l'excitation dans le cas où les sources de perturbation fixes sont réparties selon ladite répartition angulaire prédéterminée,

modifier (E65) le premier signal (ST) en un second signal (SM), adapté à ladite répartition angulaire choisie des sources de perturbation fixes,

déterminer le spectre fréquentiel de l'excitation en calculant (E66) la transformée de Fourier du second signal (SM), et

calculer (E67-E68) la réponse du rotor à l'excitation sur la base du spectre fréquentiel de l'excitation.

2. Procédé selon la revendication 1, **caractérisé en ce que** les sources de perturbation fixes ($102_j$; 14) sont identiques ; et au moins une fréquence propre du rotor ($101_j$), à la vitesse de rotation V, est sensiblement égale à NV ou à un multiple de NV, où N est le nombre de sources de perturbation fixes dans ledit ensemble.

3. Procédé selon la revendication 1 ou 2, **caractérisé en ce que** le premier signal (ST) comprend des bosses identiques (12) espacées régulièrement, chaque bosse (12) étant représentative d'une perturbation créée par une source de perturbation fixe dans l'écoulement de fluide (11), l'espacement entre deux bosses données consécutives (12) étant représentatif de l'angle défini par deux sources de perturbation consécutives dans le cas où les sources de perturbation sont réparties selon ladite répartition angulaire uniforme, et l'étape de modification (E65) consiste à adapter les espacements entre les bosses (12) aux angles de ladite répartition angulaire choisie.

4. Procédé selon l'une quelconque des revendications 1 à 3, **caractérisé en ce que** l'ensemble de sources de perturbation fixes ($102_j$; 14) est en amont du rotor ($101_j$) dans l'écoulement de fluide (11).

5. Procédé selon l'une quelconque des revendications 1 à 3, **caractérisé en ce que** l'ensemble de sources de perturbation fixes est en aval du rotor dans l'écoulement de fluide.

6. Procédé selon l'une quelconque des revendications 1 à 5, **caractérisé en ce que** les sources de perturbation fixes ($102_j$; 14) ont sensiblement une même position radiale par rapport à un point ($O_j$) correspondant, dans l'écoulement de fluide (11), à un centre de rotation ($O'_j$) du rotor.

7. Procédé selon l'une quelconque des revendications 1 à 6, **caractérisé en ce que** les sources de perturbation fixes ($102_j$) sont des aubes de stator.

8. Procédé selon l'une quelconque des revendications 1 à 6, **caractérisé en ce que** les sources de perturbation fixes (14) sont de l'un des types suivants : injecteurs de chambre de combustion, éléments de prélèvement d'air de refroidissement, vannes de décharge, éléments de réintroduction d'air de refroidissement, capteurs et sondes.

9. Procédé selon l'une quelconque des revendications 1 à 8, **caractérisé en ce que** la structure consiste en une turbomachine.

10. Utilisation du procédé de réduction de vibrations selon l'une quelconque des revendications 1 à 8 pour la conception d'une structure comprenant au moins un rotor ($101_j$) et au moins un stator, le rotor et le stator étant destinés à être soumis à un écoulement de fluide (11), la structure comprenant un ensemble de sources de perturbation fixes ($102_j$; 14) susceptibles d'entraîner des perturbations dans l'écoulement de fluide faisant vibrer le rotor.

11. Utilisation du procédé de réduction de vibrations selon l'une quelconque des revendications 1 à 8 pour la conception et la fabrication d'une structure comprenant au moins un rotor ($101_j$) et au moins un stator, le rotor et le stator étant destinés à être soumis à un écoulement de fluide (11), la structure comprenant un ensemble de sources de perturbation fixes ($102_j$; 14) susceptibles d'entraîner des perturbations dans l'écoulement de fluide faisant vibrer le rotor.

12. Structure comprenant :

au moins un rotor ($101_j$),
au moins un stator, et
au moins un ensemble d'un nombre N de sour-

ces de perturbation fixes ($102_j$ ; 14),

le rotor et l'ensemble de sources de perturbation fixes étant destinés à être traversés sensiblement perpendiculairement par un écoulement de fluide (11), dans lequel l'ensemble de sources de perturbation est susceptible d'entraîner des perturbations qui sont ensuite reçues par le rotor,

l'ensemble de sources de perturbation formant, dans un plan ($PL_j$) sensiblement perpendiculaire à l'écoulement de fluide (11), un ensemble de N angles adjacents ($\alpha_1$ à $\alpha_N$) dont la somme est égale à 360°, chaque angle étant défini par deux demi-droites consécutives ($A_i$, $A_{i+1}$) ayant pour origine un même point ($O_j$ ; O) correspondant, dans l'écoulement de fluide (11), à un centre de rotation ($O_j$') du rotor, et passant respectivement par les centres géométriques ($C_i$, $C_{i+1}$) de deux sources de perturbation,

**caractérisée en ce que** l'ensemble d'angles adjacents est constitué par :

un unique groupe d'angles adjacents dits majorés, supérieurs à 360°/N,
un premier groupe d'angles adjacents dits nominaux, égaux à 360°/N, qui est adjacent audit unique groupe d'angles adjacents majorés,
un unique groupe d'angles adjacents dits minorés, inférieurs à 360°/N, qui est adjacent audit premier groupe d'angles adjacents nominaux, et
un angle nominal supplémentaire ou un second groupe d'angles adjacents nominaux, adjacent audit unique groupe d'angles adjacents minorés.

**13.** Structure selon la revendication 12, **caractérisée en ce que** tous les angles majorés de l'ensemble d'angles adjacents sont majorés d'une même valeur prédéterminée et tous les angles minorés de l'ensemble d'angles adjacents sont minorés de ladite valeur prédéterminée.

**14.** Structure selon la revendication 12, **caractérisée en ce qu'**au moins deux angles majorés et/ou au moins deux angles minorés de l'ensemble d'angles adjacents sont différents entre eux.

**15.** Structure selon l'une quelconque des revendications 12 à 14, **caractérisée en ce que** l'ensemble d'angles adjacents comprend autant d'angles majorés que d'angles minorés.

**16.** Structure selon l'une quelconque des revendications 12 à 15, **caractérisée en ce que** chaque angle majoré et chaque angle minoré de l'ensemble d'angles adjacents diffère de 360°/N d'au plus 10%.

**17.** Structure selon l'une quelconque des revendications 12 à 15, **caractérisée en ce que** chaque angle majoré et chaque angle minoré de l'ensemble d'angles adjacents diffère de 360°/N d'au plus 5%.

**18.** Structure selon l'une quelconque des revendications 12 à 17, **caractérisée en ce que** les sources de perturbation fixes ($102_j$; 14) ont sensiblement une même position radiale par rapport au point d'origine ($O_j$ ; O).

**19.** Structure selon l'une quelconque des revendications 12 à 18, **caractérisée en ce que** l'ensemble de sources de perturbation fixes ($102_j$ ; 14) est en amont du rotor ($101_j$) dans l'écoulement de fluide (11).

**20.** Structure selon l'une quelconque des revendications 12 à 19, **caractérisé en ce que** l'ensemble de sources de perturbation fixes est en aval du rotor dans l'écoulement de fluide.

**21.** Structure selon l'une quelconque des revendications 12 à 20, **caractérisée en ce qu'**elle consiste en une turbomachine.

**22.** Structure selon l'une quelconque des revendications 12 à 21, **caractérisée en ce que** les sources de perturbation fixes ($102_j$) sont des aubes de stator.

**23.** Structure selon l'une quelconque des revendications 12 à 21, **caractérisée en ce que** les sources de perturbation fixes (14) sont de l'un des types suivants : injecteurs de chambre de combustion, éléments de prélèvement d'air de refroidissement, vannes de décharge, éléments de réintroduction d'air de refroidissement, capteurs et sondes.

**Claims**

**1.** A method of reducing vibration in a structure comprising at least one rotor (101j) and at least one stator (100j), the rotor and the stator being designed to be subjected to a fluid flow (11), the structure including a set of fixed sources of disturbance (102j; 14) liable to give rise to disturbances in the fluid flow that cause the rotor to vibrate, the method being **characterised in that**:

during design of the structure, a non-uniform angular distribution is selected (E5) for the fixed sources of disturbance so as to reduce the amplitude of excitation seen by the rotor and corresponding to said disturbances at at least one excitation frequency that coincides substantially with a natural frequency of the rotor at a speed of rotation V thereof, as compared with a predetermined uniform angular distribution of the fixed sources of disturbance; and

**in that** said method further comprises a step (E6) consisting in verifying over an entire range (ΔV2) of speeds of rotation at which the rotor (101j) is liable to rotate and including the speed of rotation V, that the maximum amplitude of a response of the rotor to the excitation when the fixed sources of disturbance are distributed in said selected angular distribution is less than the maximum amplitude when the fixed sources of disturbance are distributed in said predetermined angular distribution, said response of the rotor to the excitation when the fixed sources of disturbance are distributed in said selected angular distribution being obtained by implementing the following steps:

determining (E60-E64) a first signal (ST) whose Fourier transform corresponds to the frequency spectrum of the excitation when the fixed sources of disturbance are distributed in said predetermined angular distribution;

modifying (E65) the first signal (ST) into a second signal (SM) adapted to said selected angular distribution for the fixed sources of disturbance;

determining the frequency spectrum of the excitation by calculating (E66) the Fourier transform of the second signal (SM); and calculating (E67-E68) the response of the rotor to the excitation on the basis of the frequency spectrum of the excitation.

2. A method according to claim 1, **characterised in that** the fixed sources of disturbance (102j; 14) are identical; and at least one natural frequency of the rotor (101j) at the speed of rotation V is substantially equal to NV or a multiple of NV, where N is the number of fixed sources of disturbance in said set.

3. A method according to claim 1 or claim 2, **characterised in that** the first signal (ST) comprises identical peaks (12) that are regularly spaced apart, each peak (12) being representative of a disturbance created by a fixed source of disturbance in the fluid flow (11), the spacing between two given consecutive peaks (12) being representative of the angle defined by two consecutive sources of disturbance when the sources of disturbance are distributed in said uniform angular distribution, and the modification step (E65) consists in adapting the spacings between the peaks (12) to the angles of said selected angular distribution.

4. A method according to any one of claims 1 to 3, **characterised in that** the set of fixed sources of disturbance (102j; 14) is upstream from the rotor (101j) in

the fluid flow (11).

5. A method according to any one of claims 1 to 3, **characterised in that** the set of fixed sources of disturbance is downstream from the rotor in the fluid flow.

6. A method according to any one of claims 1 to 5, **characterised in that** the fixed sources of disturbance (102j; 14) are substantially in the same radial position relative to a point (Oj) in the fluid flow (11) corresponding to a centre of rotation (O'j) of the rotor.

7. A method according to any one of claims 1 to 6, **characterised in that** the fixed sources of disturbance (102j) are stator blades.

8. A method according to any one of claims 1 to 6, **characterised in that** the fixed sources of disturbance (14) are of one of the following types: injectors of a combustion chamber, elements for extracting cooling air, discharge valves, elements for re-injecting cooling air, sensors, and probes.

9. A method according to any one of claims 1 to 8, **characterised in that** the structure consists in a turbomachine.

10. Use of the method of reducing vibration according to any one of claims 1 to 8 for designing a structure comprising at least one rotor (101j) and at least one stator, the rotor and the stator being designed to be subjected to a fluid flow (11), the structure including a set of fixed sources of disturbance (102j; 14) liable to give rise to disturbances in the fluid flow causing the rotor to vibrate.

11. Use of the method of reducing vibration according to any one of claims 1 to 8 for designing and manufacturing a structure comprising at least one rotor (101j) and at least one stator, the rotor and the stator being designed to be subjected to a fluid flow (11), the structure including a set of fixed sources of disturbance (102j; 14) liable to give rise to disturbances in the fluid flow causing the rotor to vibrate.

12. A structure comprising:

at least one rotor (101j);

at least one stator; and

at least one set comprising a number N of fixed sources of disturbance (102j; 14);

the rotor and the set of fixed sources of disturbance being designed to have a fluid flow (11) passing substantially perpendicularly therethrough, in which flow the set of sources of disturbance is liable to give rise to disturbances which are subsequently received by the rotor;

the set of sources of disturbance forming a set of N adjacent angles ($\alpha_1$ to $\alpha_N$) in a plane (PLj) substantially perpendicular to the fluid flow (11), where the sum of said angles is equal to 360°, each angle being defined by two consecutive half-lines ($A_i$, $A_{i+1}$) having a common point ($O_j$; O) as their origin, which point corresponds, in the fluid flow (11), to a center of rotation ($O_j'$) of the rotor, the half-lines also passing through the respective geometrical centers ($C_i$, $C_{i+1}$) of two sources of disturbance;

the structure being **characterised in that** the set of adjacent angles is constituted by:

a single group of adjacent large angles that are greater than 360°/N;
a first group of adjacent nominal angles that are equal to 360°/N, this group being adjacent to said single group of adjacent large angles;
a single group of adjacent small angles that are less than 360°/N, this group being adjacent to said first group of adjacent nominal angles; and
an additional nominal angle or a second group of adjacent nominal angles, adjacent to said single group of adjacent small angles.

13. A structure according to claim 12, **characterised in that** all of the large angles in the set of adjacent angles are made larger by the same predetermined value, and all of the small angles in the set of adjacent angles are made smaller by said predetermined value.

14. A structure according to claim 12, **characterised in that** at least two large angles and/or at least two small angles in the set of adjacent angles are different from each other.

15. A structure according to any one of claims 12 to 14, **characterised in that** the set of adjacent angles comprises as many large angles as small angles.

16. A structure according to any one of claims 12 to 15, **characterised in that** each large angle and each small angle in the set of adjacent angles differs from 360°/N by no more than 10%.

17. A structure according to any one of claims 12 to 15, **characterised in that** each large angle and each small angle in the set of adjacent angles differs from 360°/N by no more than 5%.

18. A structure according to any one of claims 12 to 17, **characterised in that** the fixed sources of disturbance ($102_j$; 14) are in substantially the same radial position relative to the origin point ($O_j$; O).

19. A structure according to any one of claims 12 to 18 **characterised in that** the set of fixed sources of disturbance ($102_j$; 14) is upstream from the rotor ($101_j$) in the fluid flow (11).

20. A structure according to any one of claims 12 to 19, **characterised in that** the set of fixed sources of disturbance is downstream from the rotor in the fluid flow.

21. A structure according to any one of claims 12 to 20, **characterised in that** the structure consists in a turbomachine.

22. A structure according to any one of claims 12 to 21, **characterised in that** the fixed sources of disturbance ($102_j$) are stator blades.

23. A structure according to any one of claims 12 to 21, **characterised in that** the fixed sources of disturbance (14) are of one of the following types: injectors of a combustion chamber, elements for extracting cooling air, discharge valves, elements for re-injecting cooling air, sensors, and probes.

**Patentansprüche**

1. Verfahren zur Reduktion von Schwingungen in einer Struktur, welche wenigstens einen Rotor ($101_j$) und wenigstens einen Stator ($100_j$) umfaßt, wobei der Rotor und der Stator dazu bestimmt sind, einer Fluidströmung (11) ausgesetzt zu werden, wobei die Struktur eine Anordnung aus feststehenden Störquellen ($102_j$; 14) umfaßt, welche geeignet sind, in der Fluidströmung Störungen hervorzurufen, die den Rotor in Schwingung versetzen, **dadurch gekennzeichnet, daß:**

bei der Gestaltung der Struktur eine ungleichmäßige Winkelverteilung der feststehenden Störquellen derart gewählt wird (E5), daß die Amplitude einer Erregung, welche der Rotor erfährt und welche den genannten Störungen entspricht, für wenigstens eine Frequenz der Erregung, die im wesentlichen mit einer Eigenfrequenz des Rotors bei einer Drehgeschwindigkeit V desselben zusammenfällt, gegenüber einer gleichmäßigen vorbestimmten Winkelverteilung der feststehenden Störquellen verringert wird,
und **dadurch**, daß das Verfahren ferner einen Schritt (E6) umfaßt, der darin besteht, in einem gesamten Bereich (ΔV2) der Drehgeschwindigkeiten, mit denen sich der Rotor ($101_j$) drehen kann, einschließlich der Drehgeschwindigkeit V, zu überprüfen, daß die maximale Amplitude einer Reaktion des Rotors auf die Erregung in dem Fall, in dem die feststehenden Störquellen entsprechend der gewählten Winkelverteilung verteilt sind, geringer ist als diejenige in dem Fall, in dem die feststehenden Störquellen entsprechend der vorbestimmten Winkelverteilung verteilt sind, wobei die Reaktion des Rotors auf die Erregung in dem Fall, in dem die feststehenden Störquellen entsprechend der gewählten Winkelverteilung verteilt sind, durch Ausführen der folgenden Schritte erhalten wird:

Bestimmen (E60-E64) eines ersten Signals (ST), dessen Fourier-Transformierte dem Frequenzspektrum der Erregung in dem Fall entspricht, in dem die feststehenden Störquellen entsprechend der vorbestimmten Winkelverteilung verteilt sind,
Modifizieren (E65) des ersten Signals (ST) zu einem zweiten Signal (SM), das der gewählten Winkelverteilung der feststehenden Störquellen angepaßt ist,
Bestimmen des Frequenzspektrums der Erregung durch Berechnen (E66) der Fourier-Transformierten des zweiten Signals (SM), und
Berechnen (E67-E68) der Reaktion des Rotors auf die Erregung auf Grundlage des Frequenzspektrums der Erregung.

2. Verfahren nach Anspruch 1, **dadurch gekennzeichnet, daß** die feststehenden Störquellen ($102_j$; 14) identisch sind und wenigstens eine Eigenfrequenz des Rotors ($101_j$) bei der Drehgeschwindigkeit V im wesentlichen gleich NV oder einem Vielfachen von NV ist, wobei N die Anzahl von feststehenden Störquellen in der Anordnung ist.

3. Verfahren nach Anspruch 1 oder 2, **dadurch gekennzeichnet, daß** das erste Signal (ST) identische, gleichmäßig beabstandete Buckel (12) umfaßt, wobei jeder Buckel (12) für eine Störung repräsentativ ist, die von einer feststehenden Störquelle in der Fluidströmung (11) erzeugt wird, wobei der Abstand zwischen zwei gegebenen aufeinanderfolgenden Buckeln (12) für den von zwei aufeinanderfolgenden Störquellen definierten Winkel in dem Fall repräsentativ ist, in dem die Störquellen entsprechend der gleichmäßigen Winkelverteilung verteilt sind, und der Schritt der Modifikation (E65) darin besteht, die Abstände zwischen den Buckeln (12) den Winkeln der gewählten Winkelverteilung anzupassen.

4. Verfahren nach einem der Ansprüche 1 bis 3, **dadurch gekennzeichnet, daß** die Anordnung aus feststehenden Störquellen ($102_j$; 14) sich stromaufwärts des Rotors ($101_j$) in der Fluidströmung (11) befindet.

5. Verfahren nach einem der Ansprüche 1 bis 3, **dadurch gekennzeichnet, daß** die Anordnung aus feststehenden Störquellen sich stromabwärts des Rotors in der Fluidströmung befindet.

6. Verfahren nach einem der Ansprüche 1 bis 5, **dadurch gekennzeichnet, daß** die feststehenden Störquellen (1 02j; 14) im wesentlichen eine gleiche radiale Position in bezug auf einen Punkt ($O_j$), welcher in der Fluidströmung (11) einem Rotationsmittelpunkt ($O'_j$) des Rotors entspricht, aufweisen.

7. Verfahren nach einem der Ansprüche 1 bis 6, **dadurch gekennzeichnet, daß** die feststehenden Störquellen ($102_j$) Statorschaufeln sind.

8. Verfahren nach einem der Ansprüche 1 bis 6, **dadurch gekennzeichnet, daß** die feststehenden Störquellen (14) von einem der folgenden Typen sind: Brennkammerinjektoren, Elemente zur Entnahme von Kühlluft, Entlastungsventile, Elemente zum Wiedereinleiten von Kühlluft, Fühler und Sonden.

9. Verfahren nach einem der Ansprüche 1 bis 8, **dadurch gekennzeichnet, daß** die Struktur aus einer Turbomaschine besteht.

10. Anwendung des Verfahrens zur Reduktion von Schwingungen nach einem der Ansprüche 1 bis 8 für die Gestaltung einer Struktur, welche wenigstens einen Rotor ($101_j$) und wenigstens einen Stator umfaßt, wobei der Rotor und der Stator dazu bestimmt sind, einer Fluidströmung (11) ausgesetzt zu werden, wobei die Struktur eine Anordnung aus feststehenden Störquellen ($102_j$; 14) umfaßt, welche geeignet sind, in der Fluidströmung Störungen hervorzurufen, welche den Rotor in Schwingung versetzen.

11. Anwendung des Verfahrens zur Reduktion von Schwingungen nach einem der Ansprüche 1 bis 8 für die Gestaltung und die Herstellung einer Struktur, welche wenigstens einen Rotor ($101_j$) und wenigstens einen Stator umfaßt, wobei der Rotor und der Stator dazu bestimmt sind, einer Fluidströmung (11) ausgesetzt zu werden, wobei die Struktur eine Anordnung aus feststehenden Störquellen ($102_j$; 14) umfaßt, welche geeignet sind, in der Fluidströmung Störungen hervorzurufen, welche den Rotor in Schwingung versetzen.

12. Struktur umfassend:

wenigstens einen Rotor ($101_j$),
wenigstens einen Stator und
wenigstens eine Anordnung aus einer Anzahl N von feststehenden Störquellen ($102_j$; 14),
wobei der Rotor und die Anordnung aus feststehenden Störquellen dazu bestimmt sind, im wesentlichen senkrecht von einer Fluidströmung (11) durchströmt zu werden, in welcher die Anordnung aus Störquellen Störungen hervorrufen kann, welche anschließend von dem Rotor aufgenommen werden,

wobei die Anordnung aus Störquellen in einer Ebene ($PL_j$), die im wesentlichen senkrecht zur Fluidströmung (11) verläuft, eine Anordnung von N benachbarten Winkeln ($\alpha_1$ bis $\alpha_N$) bildet, deren Summe gleich 360° ist, wobei jeder Winkel von zwei aufeinanderfolgenden Halbgeraden ($A_i$, $A_{i+1}$) definiert wird, deren Ursprung ein gleicher Punkt ($O_j$; O) ist, welcher in der Fluidströmung (11) einem Rotationsmittelpunkt ($O_j'$) des Rotors entspricht, und welche jeweils durch die geometrischen Mittelpunkte ($C_i$, $C_{i+1}$) von zwei Störquellen verlaufen,

**dadurch gekennzeichnet, daß** die Anordnung von benachbarten Winkeln gebildet ist von:

einer einzigen Gruppe von sogenannten vergrößerten benachbarten Winkeln, die größer als 360°/N sind,

einer ersten Gruppe von sogenannten benachbarten Nennwinkein, die gleich 360°/N sind, welche erste Gruppe der einzigen Gruppe von vergrößerten benachbarten Winkeln benachbart ist,

einer einzigen Gruppe von sogenannten verkleinerten benachbarten Winkeln, die kleiner als 360°/N sind, welche einzige Gruppe der ersten Gruppe von benachbarten Nennwinkeln benachbart ist, und

einem zusätzlichen Nennwinkel oder einer zweiten Gruppe von benachbarten Nennwinkeln, der bzw. die der einzigen Gruppe von verkleinerten benachbarten Winkeln benachbart ist.

13. Struktur nach Anspruch 12, **dadurch gekennzeichnet, daß** alle vergrößerten Winkel der Anordnung von benachbarten Winkeln um einen gleichen vorbestimmten Wert vergrößert sind und alle verkleinerten Winkel der Anordnung von benachbarten Winkeln um den vorbestimmten Wert verkleinert sind.

14. Struktur nach Anspruch 12, **dadurch gekennzeichnet, daß** wenigstens zwei vergrößerte Winkel und/oder wenigstens zwei verkleinerte Winkel der Anordnung von benachbarten Winkeln voneinander unterschiedlich sind.

15. Struktur nach einem der Ansprüche 12 bis 14, **dadurch gekennzeichnet, daß** die Anordnung von benachbarten Winkeln genauso viele vergrößerte wie verkleinerte Winkel umfaßt.

16. Struktur nach einem der Ansprüche 12 bis 15, **dadurch gekennzeichnet, daß** jeder vergrößerte Winkel und jeder verkleinerte Winkel der Anordnung von benachbarten Winkeln um höchstens 10 % von 360°/N abweicht.

17. Struktur nach einem der Ansprüche 12 bis 15, **dadurch gekennzeichnet, daß** jeder vergrößerte Winkel und jeder verkleinerte Winkel der Anordnung von benachbarten Winkeln um höchstens 5 % von 360°/N abweicht.

18. Struktur nach einem der Ansprüche 12 bis 17, **dadurch gekennzeichnet, daß** die feststehenden Störquellen ($102_j$; 14) im wesentlichen eine gleiche radiale Position in bezug auf den Ursprungspunkt ($O_j$; O) aufweisen.

19. Struktur nach einem der Ansprüche 12 bis 18, **dadurch gekennzeichnet, daß** die Anordnung aus feststehenden Störquellen ($102_j$; 14) sich stromaufwärts des Rotors ($101_j$) in der Fluidströmung (11) befindet.

20. Struktur nach einem der Ansprüche 12 bis 19, **dadurch gekennzeichnet, daß** die Anordnung aus feststehenden Störquellen sich stromabwärts des Rotors in der Fluidströmung befindet.

21. Struktur nach einem der Ansprüche 12 bis 20, **dadurch gekennzeichnet, daß** sie aus einer Turbomaschine besteht.

22. Struktur nach einem der Ansprüche 12 bis 21, **dadurch gekennzeichnet, daß** die feststehenden Störquellen ($102_j$) Statorschaufeln sind.

23. Struktur nach einem der Ansprüche 12 bis 21, **dadurch gekennzeichnet, daß** die feststehenden Störquellen (14) von einem der folgenden Typen sind: Brennkammerinjektoren, Elemente zur Entnahme von Kühlluft, Entlastungsventile, Elemente zum Wiedereinleiten von Kühlluft, Fühler und Sonden.

FIG.1

FIG.2

FIG.3

**FIG.4**

```
        ┌─────────────────────────┐
        │  ARCHITECTURE GLOBALE   │
        └─────────────────────────┘
                    │         └─ E1
                    ▼
              ┌──────────┐
              │   j=0    │
              └──────────┘
                    │
                    ▼
              ┌──────────┐
         ┌───▶│  j=j+1   │◀────────────────────────┐
         │    └──────────┘                          │
         │          │                               │
         │          ▼                               │
         │  ┌─────────────────────────┐  ┌─E2       │
         │  │  DIAGRAMME DE CAMPBELL  │             │
         │  └─────────────────────────┘             │
         │          │                               │
         │          ▼                        NON    │
         │      ╱COINCIDENCE╲  NON  ┌──────────┐   ╱ ETAGE J ╲
         │     ╱      ?      ╲─────▶│REPARTITION│─▶╲    ?    ╱
         │     ╲            ╱ └─E3  │ UNIFORME  │   ╲       ╱
         │      ╲         ╱   E4─┘  └──────────┘      │ OUI
         │        OUI │                               │
         │          ▼                                 │
         │  ┌──────────────┐                          │
         └─▶│  REPARTITION │─ E5                       │
            │ NON UNIFORME │                           │
            └──────────────┘                           │
                    │                                  │
                    ▼                                  │
            ┌──────────────┐                           │
            │ VERIFICATION │─ E6                        │
            └──────────────┘                           │
                    │                                  │
                    ▼                                  │
        NON   ╱ VIBRATIONS ╲                           │
      ┌──────╱  REDUITES    ╲                          │
      │      ╲      ?       ╱ E7                        │
      │       ╲           ╱                            │
      │         OUI │                                  │
      │           ▼                                    │
      │ NON  ╱  ETAGE J  ╲  E8                          │
      └─────╱      ?      ╲                             │
            ╲            ╱                              │
             ╲         ╱                                │
               OUI │      E9                            │
                 ▼                                      │
        ┌──────────────┐                                │
        │ FABRICATION  │◀───────────────────────────────┘
        └──────────────┘
```

FIG.5

EP 1 386 058 B2

EP 1 386 058 B2

FIG.6

FIG.7

INTENSITE

FIG.15

NV    2NV    3NV    FREQUENCE

FIG.8

FIG.9

FIG.10

FIG.11

FIG.12

FIG.13

FIG.14

E5

CALCUL AERODYNAMIQUE
DE REFERENCE POUR
REPARTITION ANGULAIRE
UNIFORME   E60

TRANSFORMATION
DE FOURIER   E61

CHOIX D'UN SIGNAL
TEMPOREL ST   E62

TRANSFORMATION DE
FOURIER DU SIGNAL ST   E63

TRANSFORMEES
DE FOURIER IDENTIQUES
?   NON

E64

OUI

MODIFICATION DU SIGNAL
ST EN UN SIGNAL SM   E65

E6

TRANSFORMATION DE
FOURIER DU SIGNAL SM   E66

INTRODUCTION DES
NOUVELLES FREQUENCES
D'EXCITATION DANS LE
DIAGRAMME DE CAMPBELL   E67

FIG.16

CALCUL DE L'AMPLITUDE DE
RESONANCE DU ROTOR
POUR CHAQUE PAS δV2   E68

COMPARAISON AVEC L'AMPLITUDE
DE RESONANCE MAXIMALE DANS
LE CAS D'UNE REPARTITION
ANGULAIRE UNIFORME   E69

E7

FIG.17

FIG.18

FIG.19

**EP 1 386 058 B2**

**RÉFÉRENCES CITÉES DANS LA DESCRIPTION**

**Documents brevets cités dans la description**

- EP 0921274 A
- US 3883264 A